Europäisches Patentamt

European Patent Office

Office européen des brevets

(11) Veröffentlichungsnummer: **0 447 470 B1**

(12) **EUROPÄISCHE PATENTSCHRIFT**

(45) Veröffentlichungstag der Patentschrift: **20.04.94**

(51) Int. Cl.⁵: **C04B 35/58**

(21) Anmeldenummer: **90900811.2**

(22) Anmeldetag: **18.11.89**

(86) Internationale Anmeldenummer:
**PCT/EP89/01397**

(87) Internationale Veröffentlichungsnummer:
**WO 90/06293 (14.06.90 90/14)**

(54) **MEHRPHASIGE SILICIUMNITRIDKERAMIK MIT HOHER FESTIGKEIT UND VERFAHREN ZU IHRER HERSTELLUNG.**

(30) Priorität: **29.11.88 DE 3840171**

(43) Veröffentlichungstag der Anmeldung:
**25.09.91 Patentblatt 91/39**

(45) Bekanntmachung des Hinweises auf die Patenterteilung:
**20.04.94 Patentblatt 94/16**

(84) Benannte Vertragsstaaten:
**DE FR GB SE**

(56) Entgegenhaltungen:
**EP-A- 0 080 050
EP-A- 0 228 276
DE-A- 3 617 488**

(73) Patentinhaber: **HOECHST AKTIENGESELL-SCHAFT**

**D-65926 Frankfurt(DE)**

(72) Erfinder: **PEUCKERT, Marcellus
Platanenweg 8
D-6233 Kelkheim(DE)**

**Beschreibung**

Die vorliegende Erfindung betrifft ein Verfahren zur Herstellung einer Siliciumnitridkeramik mit hoher mechanischer Festigkeit.

Keramisches Material auf der Basis von Siliciumnitrid ist wegen seiner hohen mechanischen Festigkeit ein wichtiger Werkstoff für zahlreiche Anwendungen in der Technik und insbesondere im Maschinenbau. Siliciumnitridkeramiken werden im allgemeinen aus $\alpha$-$Si_3N_4$-Pulver unter Verwendung von oxidischen oder nitridischen Sinteradditiven wie beispielsweise Magnesiumoxid, Yttriumoxid, Aluminiumoxid und/oder Aluminiumnitrid durch verschiedenste Verfahren erhalten. Üblicherweise werden nach Mischen und Mahlen der Ausgangskomponenten diese einer Formgebung mittels Pressen, Schlickerguß oder Spritzguß unterworfen und die erhaltene Form gesintert. Sinterverfahren werden üblicherweise in einer Schutzgasatmosphäre, insbesondere unter Stickstoff bei Normaldruck oder erhöhtem Druck bis zu etwa 10 MPa oder mittels heißisostatischem Pressen bei Drucken bis in Größenordnungen von 200 MPa und Temperaturen im Bereich von 1750 bis 2000° C durchgeführt. Der Gehalt an Sinteradditiven beträgt je nach speziellem Verfahren etwa 5 bis 20 Gew.-%. Diese Sinteradditive liegen nach dem Sintern in Form einer amorphen, intergranularen Glasphase in der Siliciumnitridkeramik vor. Zahlreiche Kombinationen verschiedenster Sinteradditive wurden bereits im Stand der Technik beschrieben. Insbesondere sei hier auf die Kombination von Siliciumnitrid mit Selten-Erden-Oxiden und Aluminiumoxid, Aluminiumnitrid und Titandioxid verwiesen.

Die EP 0 176 315 A2 beschreibt Gleitelemente mit hoher Festigkeit und hohem Abriebwiderstand. Die beschriebenen Gleitelemente werden erhalten, wenn im wesentlichen die gesamte Menge an $\beta$-Phasen-Siliciumnitridpartikeln eine Größe von nicht mehr als 60 $\mu$m und einen Kornstreckungsgrad (Verhältnis der Länge zum Durchmesser des Kristalls) von wenigstens 5 aufweist.

Die EP 0 228 276 A2 beschreibt hochtemperaturfeste Gegenstände auf der Basis von gesinterten Siliciumnitridkeramiken, die dadurch hergestellt werden, daß man eine keramische Mischung mit verschiedenen Additiven versieht. Hierbei werden jeweils mehr als null, jedoch weniger als 10 % Samariumoxid, Ceroxid, Lanthanoxid oder Neodymoxid und weniger als 10 % Aluminiumnitrid sowie weniger als 5 % Zirkonoxid, Magnesiumoxid und Titandioxid eingesetzt.

Es wurde nun überraschenderweise gefunden, daß ohne Anwesenheit von Yttriumoxid, Samariumoxid und/oder anderen Selten-Erden-Oxiden und der Nichtverwendung von Aluminiumnitrid bei ganz speziellen Mengenverhältnissen weiterer Sinteradditive eine Siliciumnitridkeramik mit wesentlich verbesserter Festigkeit erhalten wird. Als Sinteradditiv Aluminiumtitanat verwendet. Unter Seltenen Erden werden hier Elemente Sc, Y und die Lanthaniden einschließlich La verstanden.

Die Herstellung der erfindungsgemäßen Siliciumnitridkeramiken erfolgt nach im Stand der Technik üblichen Verfahren, d.h. durch intensives Mischen oder Mahlen der Ausgangskomponenten in einer Attritormühle, Ringspaltkugelmühle oder einer ähnlichen Vorrichtung. Hierbei werden $\alpha$-$Si_3N_4$, und $Al_2TiO_5$ miteinander vermahlen und die so vorbereitete und im Falle einer Naßmahlung anschließend getrocknete, homogene Pulvermischung nach bekannten Verfahren des einachsialen oder isostatischen Pressens, des Schlickergießens, Schlickerdruckgießens, Spritzgießens, Bandgießens oder anderen Formgebungsverfahren in einen porösen Grünkörper überführt. Der so geformte Grünkörper wird erfindungsgemäß vorzugsweise anschließend bei Temperaturen im Bereich von 1750 bis 2000 °C in einer Inertgasatmosphäre gesintert. Der Druck der Inertgasatmosphäre beträgt vorzugsweise 0,1 bis 200 MPa. Als Inertgas wird vorzugsweise Stickstoff verwendet. Übliche Sinterzeiten liegen im Bereich von 30 min bis 5 h.

Bei dem Verfahren zur Herstellung der erfindungsgemäßen Keramiken wird dem $\alpha$-Siliciumnitrid-Pulver, das an der Oberfläche gegebenenfalls oxidiert sein kann, als Sinteradditiv 5 ein homogenes Pulver der kristallinen Verbindung Aluminiumtitanat ($Al_2TiO_5$) mit oder ohne zusätzlichem Aluminiumoxid oder Titanoxid zügesetzt. Demgemäß wird Aluminiumtitanat zur Herstellung der erfindungsgemäßen Keramiken vorzugsweise in Mengen von bis zu 8,9 Gew.-% eingesetzt.

Überraschenderweise wurde gefunden, daß Aluminiumtitanat allein, das heißt ohne Zusätze von Cer-Oxid, dem äquimolaren Gemisch aus $Al_2O_3$ und $TiO_2$ als Sinteradditiv für Siliciumnitrid überlegen ist. Gemische aus $Al_2O_3$, $Y_2O_3$ und $TiO_2$ wurden für diesen Zweck bereits früher eingesetzt (DE-OS 35 25 344). Erfindungsgemäß erhalten die eingesetzten Reaktionsmischungen max. 20 Gew.-%, vorzugsweise max. 10 Gew.-% Aluminiumtitanat. Darüberhinaus ist Aluminiumtitanat auch in Kombination mit anderen Substanzen als hervorragendes Sinteradditiv für Siliciumnitridkeramiken verwendbar. Insbesondere die Kombination von Aluminiumtitanat mit den Oxiden der Seltenen Erden, und darunter vorzugsweise Yttrium, Dysprosium, Holmium, Erbium, Thulium und Ytterbium als Sinteradditiven führt zu mechanisch sehr festen Siliciumnitridkeramiken. Der Mindestzusatz beträgt 0,5 Gew.-%, vorzugsweise 1 Gew.-% $Al_2TiO_5$.

Die hohen mechanischen Festigkeiten, die die erfindungsgemäßen Siliciumnitridkeramiken aufweisen, machen diese besonders geeignet für Anwendungen im Maschinenbau. Mit Hilfe der beschriebenen

EP 0 447 470 B1

Verfahren lassen sich aus den Keramiken hochfeste Bauteile herstellen, insbesondere für den Einsatz in Verbrennungsmotoren als Turboladerrotoren, Kolbenböden, Zylinderkopfplatten, Ventilteller, Ventilführungen, Kipphebel, Glühkerzen, Vorbrennkammern, Bauteile in Gasturbinen und vielen weiteren Anwendungen, auch außerhalb des Bereichs der Verbrennungsmotoren wie beispielsweise in Kugellagern sowie als Düsen und Schneidkeramiken.

Die folgenden Beispiele erläutern die Erfindung.

**Beispiele**

Beispiel 1

Pulver von $\alpha$-$Si_3N_4$ (mittlere Korngröße 0,5 $\mu$m; 95 % $\alpha$-/ 5 % $\beta$-Modifikation; 2,5 % $SiO_2$-Gehalt), $Yb_2O_3$-Pulver und $Al_2TiO_5$-Pulver in den in der Tabelle angegebenen Ansatzmengen wurden in Isopropanol intensiv gemischt und in einer Attritormühle mit ®Stemalox-Mahlkugeln aus 85 Gew.-% $Al_2O_3$ und 12-13 Gew.-% $SiO_2$ (Fa. Hoechst CeramTec AG) naß desagglomeriert und gemahlen. Nach dem Trocknen des Schlickers im Rotationsverdampfer wurde das so aufbereitete Pulver in einer Siliconmatrize isostatisch zu einem Grünkörper etwa der Größe 60 x 15 x 10 $mm^3$ bei 300 MPa Druck gepreßt. Dieser Grünkörper wurde in 0,1 MPa $N_2$-Druck in 1,5 h auf 1800 °C aufgeheizt, während 1 h isotherm bei 1800 °C gesintert und dann während etwa 3 h auf Raumtemperatur abgekühlt. Aus dem gesinterten Keramikkörper wurden 4,5 x 3,5 x 45 $mm^3$ Prüfstäbchen mit einer Diamantsäge gesägt, poliert und im 4-Punkt-Biegebruchversuch in einem 20/40 mm Auflager bezüglich ihrer Festigkeit bei Raumtemperatur geprüft. Die Ergebnisse sind in der Tabelle zusammengefaßt.

Vergleichsbeispiele 1 bis 5:

Diese Vergleichsbeispiele zeigen, daß schon geringe Abweichungen von der erfindungsgemäßen Sinteradditivkombination zu einer Verschlechterung der mechanischen Festigkeit führen. Die Versuchsdurchführung erfolgte wie in den Beispielen 1 bis 5. Anstelle der Sinteradditivkombination $CeO_2$-$Al_2O_3$-$TiO_2$ wurden jedoch in den in der Tabelle angegebenen Mengen andere Additivkomhinationen verwendet. In den Vergleichsbeispielen 1 und 2 ist $CeO_2$ durch andere Seltene Erden, $Y_2O_3$ bzw. $Sm_2O_3$ substituiert. In Vergleichsbeispiel 3 wurde $Al_2O_3$ durch AlN substituiert, und in den Vergleichsbeispielen 4 und 5 fehlten $Al_2O_3$ bzw. $TiO_2$ als Additive. Die Ergebnisse sind in der Tabelle wiedergegeben.

3

**T A B E L L E**

4-Punkt Biegebruchfestigkeiten $\sigma_B$ von Silicumnitridkeramik

Beispiel      Gehalt in Gewichtsprozent, Rest $\alpha\text{-}Si_3N_4$
Nr.

| | $CeO_2$ | $Al_2O_3$ | $TiO_2$ | $Al_2TiO_5$ | $Y_2O_3$ | $Sm_2O_3$ | $Yb_2O_3$ | AlN | $\sigma_B$ (MPa) |
|---|---|---|---|---|---|---|---|---|---|
| Vgl. 1 | - | 2,3 | 1,8 | - | 10,0 | - | | - | 633 |
| Vgl. 2 | - | 4,3 | 3,4 | - | - | 8,7 | | - | 623 |
| Vgl. 3 | 11,5 | - | 4,0 | - | - | - | | 2,0 | 584 |
| Vgl. 4 | 11,5 | - | 1,8 | - | - | - | | - | 537 |
| Vgl. 5 | 11,5 | 4,3 | - | - | - | - | | - | 626 |

**Patentansprüche**

1. Verfahren zur Herstellung einer Siliciumnitridkeramik, bei dem man α-Siliciumnitrid-Pulver mit einem Sinteradditiv mischt, das Titan und Aluminium in oxidischer Form enthält, man die Pulvermischung zu

EP 0 447 470 B1

einem Festkörper verformt und den geformten Körper in einer Inertgasatmosphäre sintert, dadurch gekennzeichnet, daß das Sinteradditiv Aluminiumtitanat der Formel $Al_2TiO_5$ enthält.

2. Verfahren nach Anspruch 1, dadurch gekennzeichnet, daß man kristallines Aluminiumtitanat-Pulver in einer Menge von maximal 10 Gew.-% einsetzt.

3. Verfahren nach einem der Ansprüche 1 oder 2, dadurch gekennzeichnet, daß man das intensive Mischen der Ausgangsstoffe in einer Attritor- oder einer Ringspaltkugelmühle durchführt.

4. Verfahren nach einem der Ansprüche 1 bis 3, dadurch gekennzeichnet, daß man die Formgebung mittels kaltisostatischem oder einachsialem Fressen, Schlickergießen, Spritzgießen oder Bandgießen durchführt.

5. Verfahren nach einem der Ansprüche 1 bis 4, dadurch gekennzeichnet, daß man das Sintern des Grundkörpers bei 1750 bis 2000 °C in einer Inertgasatmosphäre unter einem STickstoffdruck von 0,1 bis 200 MPa im Verlauf von 0,5 bis 5 h durchführt.

6. Verwendung der Siliciumnitridkeramik hergestellt gemäß Anspruch 1 als Bauteil in Verbrennungsmotoren, Gasturbinen, Kugellagern, Düsen und Schneidkeramiken.

7. Verwendung nach Anspruch 6 als Turboladerrotoren, Kolbenböden, Zylinderkopfplatten, Ventilteller, Ventilführungen, Kipphebel, Glühkerzen oder Vorbrennkammern.

**Claims**

1. A process for producing a silicon nitride ceramic material, in which $\alpha$-silicon nitride powder is mixed with a sintering additive which contains titanium and aluminum in the oxide form, the powder mixture is molded into a solid shape and the molded shape is sintered in an inert gas atmosphere, wherein the sintering additive contains aluminum titanate of the formula $Al_2TiO_5$.

2. The process as claimed in claim 1, wherein crystal-line aluminum titanate powder is used in a quantity of at most 10% by weight.

3. The process as claimed in one of claims 1 or 2, wherein the intensive mixing of the starting materials is carried out in an attritor mill or in a ring slot ball mill.

4. The process as claimed in any of claims 1 to 3, wherein the shaping is carried out by cold-isostatic or uniaxial pressing, slip casting, injection molding or strip casting.

5. The process as claimed in any of claims 1 to 4, wherein the sintering of the initial shape is carried out at 1750 to 2000 °C in an inert gas atmosphere under a nitrogen pressure of 0.1 to 200 MPa in the course of 0.5 to 5 hours.

6. The use of the silicon nitride ceramic material produced as claimed in claim 1 as a component in internal combustion engines, gas turbines, ball bearings, jets and ceramic cutting materials.

7. The use as claimed in claim 6 as turbocharger rotors, piston heads, cylinder head plates, valve disks, valve guides, rocker arms, glow plugs or precombustion chambers.

**Revendications**

1. Procédé de fabrication d'une céramique de nitrure de silicium dans lequel on mélange une poudre de nitrure de silicium $\alpha$ avec un additif de frittage comprenant du titane et de l'aluminium à l'état oxydé, on donne au mélange la forme voulue d'un corps solide et on fritte celui-ci dans une atmosphère de gaz inerte, procédé caractérisé en ce que l'additif de frittage contient du titanate d'aluminium $Al_2TiO_5$.

2. Procédé selon la revendication 1, caractérisé en ce que l'on mélange une poudre cristalline de titanate d'aluminium dans une proportion d'au maximum 10 % en poids.

5

3. Procédé selon l'une des revendications 1 ou 2, caractérisé en ce que l'on effectue le mélange intense dans un broyeur attriteur ou à billes à fentes annulaires.

4. Procédé selon l'une des revendications 1 à 3, caractérisé en ce que l'on effectue la mise en forme ou moulage par un pressage isostatique à froid ou monoaxial, coulée en barbotine, moulage par injection ou coulage en bande.

5. Procédé selon l'une des revendications 1 à 4, caractérisé en ce que l'on effectue le frittage du corps vert entre 1750 et 2000°C dans une atmosphère de gaz inerte sous une pression d'azote de 0,1 à 200 MPa, en une durée d'une demi-heure à 5 heures.

6. Emploi de la céramique de nitrure de silicium obtenue selon la revendication 1 comme pièce de moteurs à combustion, turbines à gaz, roulements à billes, buses ou céramiques de coupe.

7. Emploi selon la revendication 6 comme rotors de turbocompresseurs à suralimentation, têtes de pistons, plaques de têtes de cylindres, têtes de soupapes, guides de soupapes, culbuteurs, bougies ou chambres d'allumage.